(19) Europäisches Patentamt / European Patent Office / Office européen des brevets

(11) **EP 2 770 392 B1**

(12) **FASCICULE DE BREVET EUROPEEN**

(45) Date de publication et mention de la délivrance du brevet:
**25.05.2016 Bulletin 2016/21**

(51) Int Cl.:
*G05B 23/02* (2006.01)    *B64C 13/50* (2006.01)

(21) Numéro de dépôt: **14155718.1**

(22) Date de dépôt: **19.02.2014**

(54) **Procédé et dispositif de détection d'un blocage et/ou d'un embarquement d'une gouverne d'aéronef**

Verfahren und Vorrichtung zur Erkennung einer Blockierung und/oder Verladung einer Steuerfläche eines Luftfahrzeugs

Method and device for detecting a locking and/or a deployment of an aircraft control surface

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.02.2013 FR 1351502**

(43) Date de publication de la demande:
**27.08.2014 Bulletin 2014/35**

(73) Titulaires:
- **Airbus Opérations SAS**
  **31060 Toulouse (FR)**
- **Institut Polytechnique de Bordeaux**
  **33607 Pessac Cedex (FR)**
- **Centre National de la Recherche Scientifique (CNRS)**
  **75794 Paris Cedex 16 (FR)**
- **UNIVERSITE DE BORDEAUX**
  **33000 Bordeaux (FR)**

(72) Inventeurs:
- **Gheorghe, Anca**
  **31000 Toulouse (FR)**

- **Dayre, Rémy**
  **31820 Pibrac (FR)**
- **Goupil, Philippe**
  **32600 Beaupuy (FR)**
- **Zolghadri, Ali**
  **33850 Leognan (FR)**
- **Cieslak, Jérôme**
  **33400 Talence (FR)**
- **Henry, David**
  **33160 Saint Aubin de Medoc (FR)**

(74) Mandataire: **Gevers & Orès**
  **41 avenue de Friedland**
  **75008 Paris (FR)**

(56) Documents cités:
EP-A1- 2 551 191    EP-A2- 2 026 158
EP-A2- 2 204 778    US-A1- 2003 080 256

- BOUZERDOUM A ET AL: "A Recursive Autoregressive Method for Spectral Estimation", 19960825; 19960825 - 19960830, vol. 1, 25 août 1996 (1996-08-25), pages 312-313, XP010240980,

**Description**

La présente invention concerne un procédé et un dispositif de détection d'un blocage et/ou d'un embarquement d'une gouverne d'aéronef qui est asservie en position par une chaîne d'asservissement, ainsi qu'un système de commandes de vol électriques comportant un tel dispositif de détection.

La présente invention s'applique à une chaîne d'asservissement :

- qui est destinée à asservir en position tous types de gouverne d'aéronef, tels que des ailerons, des spoilers ou une gouverne de profondeur par exemple ;
- qui fait partie d'un système de commandes de vol électriques de l'aéronef ; et
- qui comporte :

  - ladite gouverne qui est mobile, et dont la position par rapport à l'aéronef est réglée par au moins un actionneur ;
  - ledit actionneur qui règle la position de ladite gouverne, en fonction d'au moins un ordre d'actionnement reçu ;
  - au moins un capteur qui mesure la position effective de ladite gouverne ; et
  - un calculateur (de commandes de vol) qui élabore un ordre d'actionnement de la gouverne, transmis audit actionneur, à partir de ladite position effective mesurée et d'un ordre de commande calculé à partir de l'action du pilote sur un manche de commande ou de l'action du pilote automatique et de l'état de l'aéronef (comme l'altitude, la vitesse et l'attitude de l'aéronef par exemple).

Dans le cadre de la présente invention, on entend par « blocage » ou grippage (« jamming » en anglais) d'une gouverne, la situation d'une gouverne qui reste figée à sa position courante, c'est-à-dire qui ne répond plus à des ordres de commande qui varient.

En outre, on entend par « embarquement d'une gouverne » un mouvement non commandé de cette gouverne (c'est-à-dire un mouvement qui n'est généré par aucune commande d'un moyen destiné à son contrôle sur l'aéronef), qui peut amener cette dernière jusqu'à sa butée aérodynamique ou mécanique, si ce phénomène n'est pas détecté et arrêté.

La présente invention concerne donc la détection d'un blocage et/ou d'un embarquement d'au moins une gouverne d'aéronef, dû à au moins une panne (indépendamment de l'origine de la panne), survenant dans la chaîne d'asservissement en position associée, au sein d'un système de commandes de vol.

Le document EP 2 551 191 A1 divulgue un dispositif et un procédé de détection d'un blocage et/ou d'un embarquement d'une gouverne d'aéronef qui est asservie en position par une chaîne d'asservissement faisant partie d'un système de commandes de vol électriques de l'aéronef.

On sait que les calculateurs de commandes de vol réalisent, entre autres, l'asservissement en position des gouvernes d'un aéronef, par exemple d'un avion de transport. Le mouvement de la gouverne est généré par un actionneur qui peut être, soit en mode actif, soit en mode passif. On prévoit, en général, deux actionneurs par gouverne. Un calculateur dit « maître » réalise l'asservissement, en envoyant une commande sur l'actionneur actif. L'autre actionneur, associé à un deuxième calculateur dit « esclave », est forcé en mode passif à suivre le mouvement de la gouverne. Si le calculateur maître détecte, par l'intermédiaire de moyens de surveillance spécifiques, une panne, il passe l'actionneur actif en mode passif, et donne la main au calculateur esclave qui asservit le deuxième actionneur (passé alors en mode actif).

Le blocage et/ou l'embarquement d'une gouverne, en fonction du point de vol de l'aéronef, peut avoir des conséquences sur le guidage dudit aéronef, sur le dimensionnement de sa structure en raison des charges générées ainsi que sur ses performances. Il est donc nécessaire de pouvoir détecter une telle panne suffisamment rapidement avant que les conséquences au niveau de l'aéronef ne soient trop importantes, en particulier afin de pouvoir prévenir l'équipage pour qu'il puisse effectuer les actions limitant les conséquences de cette panne ou afin de procéder à une reconfiguration automatique du système.

La présente invention a pour objet de limiter les conséquences précitées. Elle concerne un procédé, qui est particulièrement robuste et qui est applicable à tout type d'aéronef à commandes de vol électriques, pour détecter un blocage et/ou un embarquement d'une gouverne de l'aéronef, qui est asservie en position par une chaîne d'asservissement, ledit procédé permettant de détecter un tel blocage, quelle que soit son origine, à des niveaux suffisamment faibles pour éviter les limitations précitées au niveau de l'aéronef, et ce en un temps court, et/ou un embarquement, quelle que soit son origine, en un temps court et quelle que soit la dynamique de cet embarquement.

A cet effet, selon l'invention, ledit procédé de détection d'un blocage et/ou d'un embarquement d'une gouverne de l'aéronef qui est asservie en position par une chaîne d'asservissement faisant partie d'un système de commandes de vol électriques de l'aéronef et comportant :

- ladite gouverne qui est mobile, et dont la position par rapport à l'aéronef est réglée par au moins un actionneur ;

- ledit actionneur qui règle la position de ladite gouverne, en fonction d'au moins un ordre d'actionnement reçu sous forme de commande d'asservissement ;
- au moins un capteur qui mesure la position effective de ladite gouverne ; et
- au moins un calculateur qui élabore un ordre de commande de gouverne, qui reçoit ladite position effective mesurée et qui en déduit un ordre d'actionnement qui est transmis audit actionneur sous forme d'une commande d'asservissement,

est remarquable en ce que l'on réalise, de façon automatique et répétitive, la suite d'étapes successives suivantes consistant :

a) à estimer la valeur d'au moins un paramètre d'une équation modélisant la dynamique de la boucle d'asservissement de la gouverne, conformément à une méthode récursive autorégressive à variable exogène de type RARX (pour « Recursive Autoregressive with Exogenous Input » en anglais), au sens des moindres carrés récursifs ; et
b) à détecter un blocage et/ou un embarquement de ladite gouverne, en fonction au moins de la valeur ainsi estimée dudit paramètre par l'application d'un test de décision dans l'espace paramétrique.

Ainsi, grâce à l'invention, par l'application d'un test paramétrique (qui consiste en l'estimation des paramètres modélisant la dynamique de la boucle d'asservissement de la gouverne, conformément à une méthode autorégressive à variable exogène de type RARX au sens des moindres carrés récursifs, suivi par un test de décision effectué sur au moins un des paramètres estimés), on est en mesure de mettre en évidence un blocage et/ou un embarquement de la gouverne lorsqu'il survient.

Plus particulièrement, grâce à l'invention, on est en mesure de détecter, dans la chaîne d'asservissement surveillée, comme précisé ci-dessous, en un temps court, tout blocage et/ou embarquement d'une gouverne asservie, quelle que soit l'origine de la panne, et ceci à des niveaux suffisamment faibles pour éviter les limitations précitées au niveau de l'aéronef.

Le procédé conforme à l'invention permet donc de détecter des blocages de faibles amplitudes, et/ou des embarquements de différentes dynamiques avant que la position de la gouverne ne soit trop importante, et ainsi d'améliorer la contrôlabilité de l'aéronef, ses performances et de diminuer les charges structurales en cas de panne, et ceci sans pénalité sur le bilan de masse et de coût (aucun capteur supplémentaire n'est notamment nécessaire). La diminution des charges structurales en vol permet même de diminuer le poids de l'aeronef par une optimisation de son design structural.

Selon différents modes de réalisation de l'invention, qui pourront être pris ensembles ou séparément :

- à l'étape a), l'équation modélisant la dynamique de la boucle d'asservissement est d'ordre 2 et présente la forme suivante :

$$\hat{y}(k) = b_1(k-1)u(k-nk) - a_1(k-1)y(k-1) \ ;$$

dans laquelle :

- $\hat{y}(k)$ est la position estimée de ladite gouverne à un instant $k$ ;
- $y(k)$ est la position réelle de ladite gouverne à l'instant $k$ fournie par ledit capteur ;
- $u(k)$ est une consigne, à l'instant $k,$ calculée par un calculateur de commandes de vol à partir notamment d'un ordre donné par le pilote ;
- $nk$ est un nombre d'échantillons de retard entre l'ordre donné et la position ; et
- $a_1(k)$ et $b_1(k)$ sont des paramètres à estimer à l'instant $k$;

- à l'étape b), un blocage est détecté si une valeur estimée du paramètre $b_1$ converge vers 0 ;
- à l'étape b), le blocage est détecté au moins si, ladite valeur estimée du paramètre $b_1$ convergeant vers 0, sa valeur absolue est inférieure à un premier seuil prédéterminé pendant un temps donné ;
- à l'étape b), le blocage est détecté si, de plus, la valeur absolue d'une consigne d'asservissement $u$ est supérieure à un second seuil prédéterminé ;
- à l'étape b), deux régions de confiance sont définies, d'une part, par la valeur estimée du paramètre $b_1$ et une matrice de covariance associée estimée en ligne, et d'autre part, par une valeur calculée d'un paramètre $b_1$ de référence et une matrice de covariance associée, et un embarquement est détecté dès que ces deux régions de confiance ne se chevauchent plus ;

- à l'étape b), un embarquement est détecté, si à la fois une valeur estimée du paramètre $b_1$ converge vers 0 et si, de façon simultanée, un signal d'erreur fonction de données mesurées ou utilisées dans la boucle d'asservissement (par exemple $u$ et $y$), est supérieur à un troisième seuil pendant un temps de confirmation, (la partie de procédé concernant le signal d'erreur étant décrite dans la demande de brevet FR1156900) ;
- à l'étape a), la méthode de type RARX prend en compte un facteur d'oubli directionnel ;
- le facteur d'oubli directionnel présente une première valeur pour détecter un blocage, et une deuxième valeur pour détecter un embarquement, la première valeur étant inférieure à la deuxième valeur ;
- à l'étape a), une version améliorée (plus robuste), de la méthode de type RARX est utilisée, par l'introduction d'un facteur d'oubli directionnel et d'une étape de factorisation U-D de Bierman ;
- en cas de détection d'un blocage ou d'un embarquement à l'étape b), on émet une alerte.

L'invention se rapporte aussi à un dispositif de détection d'un blocage et/ou d'un embarquement d'une gouverne d'aéronef qui est asservie en position par une chaîne d'asservissement, ladite chaîne d'asservissement faisant partie d'un système de commandes de vol électriques de l'aéronef et comportant :

- ladite gouverne qui est mobile, et dont la position par rapport à l'aéronef est réglée par au moins un actionneur ;
- ledit actionneur qui règle la position de ladite gouverne, en fonction d'au moins un ordre d'actionnement reçu sous forme de commande d'asservissement ;
- au moins un capteur qui mesure la position effective de ladite gouverne ; et
- un calculateur qui élabore un ordre de commande de gouverne, qui reçoit ladite position effective mesurée et qui en déduit un ordre d'actionnement qui est transmis audit actionneur sous forme d'un courant d'asservissement.

Selon l'invention, ce dispositif pour détecter un blocage et/ou un embarquement de ladite gouverne est remarquable en ce qu'il comporte :

- des premiers moyens pour estimer la valeur d'au moins un paramètre d'une équation modélisant la dynamique de la boucle d'asservissement de la gouverne, conformément à une méthode autorégressive à variable exogène de type RARX au sens des moindres carrés récursifs ; et
- des deuxièmes moyens pour détecter un blocage et/ou un embarquement de ladite gouverne, en fonction au moins de la valeur ainsi estimée dudit paramètre par l'application d'un test de décision dans l'espace paramétrique.

La présente invention se rapporte également à un système de commandes de vol électriques d'un aéronef, ledit système comportant au moins un moyen pour engendrer un ordre de commande de gouverne pour au moins une gouverne de l'aéronef et au moins une chaîne d'asservissement en position de cette gouverne, qui comprend :

- ladite gouverne qui est mobile, et dont la position par rapport à l'aéronef est réglée par au moins un actionneur ;
- ledit actionneur qui règle la position de ladite gouverne, en fonction d'au moins un ordre d'actionnement reçu ;
- au moins un capteur qui mesure la position effective de ladite gouverne ; et
- un calculateur qui élabore ledit ordre de commande de gouverne, qui reçoit ladite position effective et qui en déduit un ordre d'actionnement qui est transmis audit actionneur.

Selon l'invention, ce système de commandes électriques est remarquable en ce qu'il comporte de plus, un tel dispositif de détection d'un blocage et/ou d'un embarquement d'une gouverne.

L'invention se rapporte encore à un aéronef comportant un tel dispositif de détection et/ou un tel système de commandes électriques.

Les figures du dessin annexé feront bien comprendre comment l'invention peut être réalisée. Sur ces figures, des références identiques désignent des éléments semblables.

La figure 1 illustre schématiquement une chaîne d'asservissement en position d'une gouverne d'aéronef, qui comporte un dispositif de détection selon un mode de réalisation particulier de l'invention.

La figure 2 est un schéma synoptique du procédé selon l'invention.

La figure 3 est un graphique illustrant les zones de confiance selon un mode de réalisation de l'invention appliqué à l'embarquement.

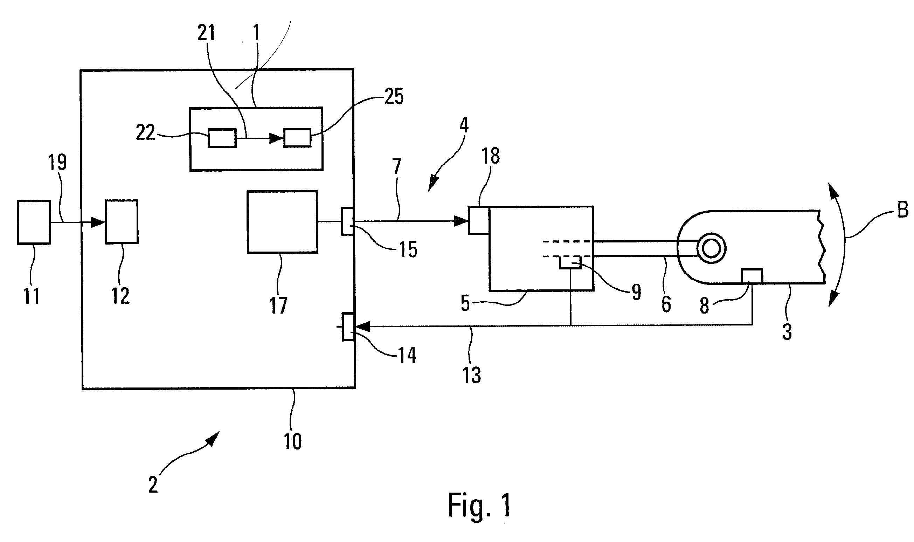

Le dispositif 1 conforme à l'invention est destiné à détecter au moins un blocage et/ou un embarquement d'une gouverne 3 (aileron, spoiler, gouverne de profondeur, gouverne de direction) d'un aéronef, en particulier d'un avion de transport, qui est asservie en position par une chaîne d'asservissement 2 (représentée sur la figure 1).

De façon usuelle, cette chaîne d'asservissement 2 fait partie d'un système de commandes de vol électriques 4 de l'aéronef (non représenté) et comporte :

- ladite gouverne 3 qui est mobile, en étant susceptible d'être braquée comme illustré par une flèche double B sur la figure 1, et dont la position par rapport à la structure de l'aéronef est réglée par au moins un actionneur usuel 5 ;
- ledit actionneur 5 qui règle la position de ladite gouverne 3, par exemple par l'intermédiaire d'une tige 6 qui agit sur cette dernière, en fonction d'au moins un ordre d'actionnement reçu par l'intermédiaire d'une liaison 7 ;
- au moins un capteur 8, 9 qui mesure la position effective de ladite gouverne 3. A cet effet, il peut s'agir d'un capteur 8 qui est directement associé à la gouverne 3 de type RVDT (pour « Rotary Variable Differential Transducer » en anglais) et/ou d'un capteur 9 de type LVDT (pour « Linear Variable Differential Transducer » en anglais) qui mesure par exemple le déplacement de la tige 6 de l'actionneur 5 ; et
- un calculateur 10, par exemple un calculateur de commandes de vol:

  • qui reçoit des informations de commande de moyens 11, par l'intermédiaire d'une liaison 19. Ces moyens 11 sont des moyens usuels de génération d'informations de commande et comportent, par exemple, un manche de commande qui est susceptible d'être actionné par un pilote de l'aéronef et des capteurs inertiels ;
  • qui élabore de façon usuelle un ordre de commande de gouverne, à l'aide d'un moyen de calcul intégré 12 qui contient des lois de pilotage et qui utilise pour cette élaboration des informations de commande (par exemple l'action du pilote sur le manche de commande, paramètres qui indiquent la position de l'aéronef autour de son centre de gravité, facteurs de charge qu'il subit) reçues desdits moyens 11 ;
  • qui reçoit la position effective mesurée par le ou les capteurs 8 et 9, par l'intermédiaire d'une liaison 13, via une entrée 14 de type analogique ou numérique ;
  • qui calcule à partir des informations précédentes (ordre de commande de gouverne et position effective mesurée) ledit ordre d'actionnement, à l'aide d'un moyen de calcul 17 intégré tenant compte d'un gain prédéterminé ; et
  • qui transmet cet ordre d'actionnement (sous forme d'une commande d'asservissement) à un moyen de commande 18 (par exemple une servovalve ou un moteur électrique) de l'actionneur 5, par l'intermédiaire de la liaison 7 via une sortie 15 de type analogique ou numérique.

Ledit système de commandes de vol électriques 4 comporte, en plus de ladite chaîne d'asservissement 2, le dispositif 1 conforme à l'invention qui est destiné à détecter au moins un blocage et/ou un embarquement de la gouverne 3, et ceci quel que soit son profil dynamique et quelle que soit l'origine de la panne.

Pour ce faire, ledit dispositif de détection 1 comporte, comme représenté sur la figure 1 :

- des premiers moyens 22 pour estimer la valeur d'au moins un paramètre d'une équation modélisant la dynamique de la boucle d'asservissement de la gouverne 3, conformément à une méthode autorégressive à variable exogène de type RARX au sens des moindres carrés récursifs ; et
- des deuxièmes moyens 25 pour détecter un blocage et/ou un embarquement de ladite gouverne 3, en fonction de la valeur ainsi estimée dudit paramètre.

Lesdits premiers moyens 22 transmettent les valeurs estimées du ou des paramètres considérés auxdits deuxièmes moyens 25 par l'intermédiaire d'une liaison 21.

Par conséquent, ledit dispositif 1 applique un test paramétrique permettant de détecter une anomalie de type embarquement et /ou blocage dans la boucle d'asservissement en position d'une gouverne 3 d'un aéronef.

Ledit dispositif 1 permet notamment de diminuer les valeurs maximales atteintes en cas d'embarquement et de détecter des blocages à faibles amplitudes, même autour de 0°. L'invention améliore la contrôlabilité de l'aéronef, ses performances et diminue les charges structurales en cas de panne, sans augmentation de la masse ou du coût de fabrication, car elle utilise des sources d'information déjà présentes dans le calculateur de commandes de vol et n'a pas recours à des capteurs spécifiques ou à des équipements supplémentaires.

Le test paramétrique utilise un algorithme d'estimation récursive au sens des moindres carrés de type RARX, afin d'estimer les paramètres modélisant la dynamique de la boucle d'asservissement de la gouverne 3. Les paramètres de la fonction de transfert identifiée de la boucle fermée varient dans le temps et sont mis à jour à chaque pas d'échantillonnage *k*. Après avoir choisi la structure appropriée du modèle en fonction des connaissances physiques de différents éléments de la boucle d'asservissement, un test de décision est appliqué dans l'espace paramétrique par l'intermédiaire des moyens 25.

Plus précisément, on estime dans un premier temps la position de la gouverne à l'instant *k*, comme une combinaison linéaire des mesures passées de l'ordre d'asservissement (ordre pilote interprété par les lois de pilotage) et des mesures des sorties passées (de la position de la tige fournie par le capteur LVDT). Sachant que l'algorithme d'identification appliqué minimise l'erreur de prédiction, la position estimée va suivre la position réelle même en cas de défaut. Autrement dit, au moment de la panne, les coefficients associés à l'ordre d'asservissement, qui est différent de la position réelle, vont converger vers 0.

La structure générale d'un modèle de type RARX est :

$$y(k) = \varphi^T(k)\theta(k-1) + \varepsilon(k) \;\; ; \qquad\qquad (1)$$

où $\varphi(k)$ représente l'ensemble des mesures précédentes, à savoir celles de l'ordre et de la position, $\theta(k)$ est l'ensemble des paramètres inconnus qui varient en fonction de l'entrée $u(k)$ et de la sortie $y(k)$ et $\varepsilon(k)$ représente l'effet du bruit sur la sortie, qui peut provenir de l'erreur de précision de mesure des capteurs, ou l'erreur de modélisation.

Les vecteurs $\varphi(k)$ et $\theta(k)$ ont la structure suivante :

$$\begin{cases} \varphi^T(k) = [-y(k-1).....-y(k-na) \;\; u(k-nk)..u(k-nk-nb+1)] \\ \theta(k) = [a_1(k)...a_{na}(k) \;\; b_1(k)...b_{nb}(k)]^T \end{cases} \qquad (2)$$

où [na nb nk] est l'ordre du système.

Sachant qu'à la suite d'une expérience on dispose d'un ensemble de mesures, en négligeant l'erreur d'équation $\varepsilon(k)$, la sortie prédite à l'instant $k$ est le produit scalaire entre le vecteur connu des données entrée/sortie disponibles jusqu'au moment présent et le vecteur des paramètres inconnus :

$$\hat{y}(k) = \varphi^T(k)\hat{\theta}(k-1) \qquad\qquad (3)$$

L'équation (3) se traduit par le fait qu'on calcule la position de la gouverne 3 en fonction de précédents échantillons de l'ordre et de la position mesurée par le capteur 9 de type LVDT.

Dans l'identification de type RARX, le vecteur des paramètres $\theta(k)$ est obtenu en minimisant la somme des erreurs quadratiques entre la sortie réelle $y(k)$ et la sortie prédite $\hat{y}(k)$. A partir des équations (1) et (3), on déduit que le critère à minimiser est dans ce cas, l'erreur $\varepsilon(k)$ de l'équation (1).

Dans un mode de réalisation préféré, dans les processus de modélisation et d'identification, on utilise les connaissances physiques portant sur les différents éléments qui constituent la boucle fermée afin de choisir la structure appropriée du modèle. Pour cela, on calcule la position de la gouverne 3, en prenant en compte une seule valeur ancienne de l'ordre et une seule valeur de la sortie à l'instant précédent.

Ainsi, l'équation modélisant la dynamique de la boucle d'asservissement est d'ordre 2 et présente la forme suivante :

$$\hat{y}(k) = b_1(k-1)u(k-nk) - a_1(k-1)y(k-1) \;\; ;$$

dans laquelle :

- $\hat{y}(k)$ est la position estimée de ladite gouverne à un instant $k$ ;
- $y(k)$ est la position réelle de ladite gouverne à l'instant $k$ fournie par ledit capteur ;
- $u(k)$ est un ordre donné par le pilote à l'instant $k$ ;
- $nk$ est un nombre d'échantillons de retard entre l'ordre donné et la position ; et
- $a_1(k)$ et $b_1(k)$ sont des paramètres à estimer.

Dans un mode de réalisation particulier, un retard de dix échantillons ($nk$=10), entre l'ordre et la position, est utilisé dans le modèle.

L'ordre deux de l'équation modélisant la dynamique de la boucle d'asservissement permet au modèle d'avoir un coût calculatoire faible.

Dans un premier mode de réalisation, un blocage est détecté par les deuxièmes moyens 25 de détection si une valeur estimée du paramètre $b_1$ converge vers 0.

En effet, le principe de l'identification de type RARX consiste à construire l'erreur entre la sortie estimée $\hat{y}(k)$ et la sortie réelle $y(k)$, puis à utiliser cette erreur, à chaque instant, pour modifier les paramètres du modèle de la boucle d'asservissement afin d'obtenir la meilleure prédiction de la sortie du système. Ainsi, l'erreur entre la sortie estimée et la sortie réelle est de moyenne nulle et de variance minimale au sens du critère des moindres carrés récursifs. Sachant que l'algorithme récursif, à partir d'un ordre du modèle, diminue l'erreur d'estimation de la sortie $\varepsilon(k)$, la sortie estimée va suivre la sortie réelle même en cas de défaut. En conséquence, au moment d'une anomalie, ou peu de temps après, l'estimation de la sortie n'accordera pratiquement plus de poids à l'ordre *u(k-nk)*, en accordant tout le poids à la valeur de la sortie à l'instant précédent *y(k-1)*.

A partir de l'équation $\hat{y}(k)=b_1[(k-1)u(k-nk)-a_1(k-1)y(k-1)]$, le paramètre $b_1$ va converger vers 0 au moment de la panne. De plus, le paramètre $a_1$ va converger vers -1, sauf pour les blocages à 0° de la gouverne 3.

Ainsi, le paramètre $b_1$ est utilisé comme signal indicateur d'un défaut, la convergence de sa valeur estimée vers 0 indiquant l'apparition d'un blocage. La détection est donc effectuée dans l'espace paramétrique et non dans l'espace des sorties.

Dans une première variante, le blocage est détecté au moins si ladite valeur estimée du paramètre $b_1$ est inférieure à un premier seuil prédéterminé pendant un temps donné.

La mise en place d'un temps de confirmation long et d'un faible seuil de détection rend la détection plus robuste. En effet, plus le seuil est grand, plus le risque de déclencher une fausse alarme augmente car la valeur absolue du paramètre $b_1$ pourrait être inférieure au seuil en fonctionnement normal.

En outre, dans une seconde variante, le blocage est détecté si, de plus, la valeur absolue de la consigne d'asservissement *u* est supérieure à un second seuil prédéterminé.

En effet, de petits ordres d'asservissement pourraient entraîner une très faible valeur du paramètre estimé, éventuellement inférieure au seuil de détection fixé, et donc conduire dans ce cas précis à de fausses alarmes. En conséquence, afin d'assurer la robustesse du modèle, une condition supplémentaire liée à l'ordre du pilote est utilisée dans le test de décision.

Plus précisément, un blocage est confirmé si pendant un temps de confirmation donné, la valeur absolue du paramètre estimé $b_1$ est inférieure à un seuil $s_1$ donné, et si la valeur absolue de la consigne d'asservissement *u* est supérieure à un seuil $s_2$ donné. Il est à noter que la valeur du seuil $s_2$ est très faible et qu'un blocage à 0° pour des consignes autour de 0° (donc inférieures en valeur absolue à2), n'est pas considéré comme une panne car la position de la gouverne 3 correspond dans ce cas, à l'ordre du pilote.

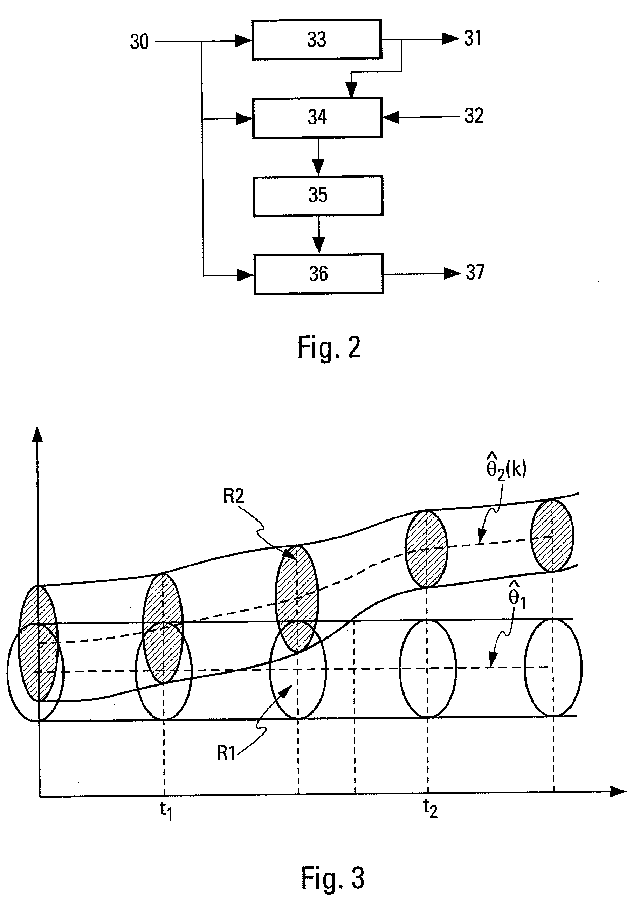

Selon un deuxième mode de réalisation, les moyens 25 détectent un embarquement dès que deux régions de confiance R1 et R2 ne se chevauchent plus, tel que cela est représenté sur la figure 3. Les deux régions de confiance R1 et R2 sont définies, d'une part, par la valeur estimée du paramètre $b_1$ et une matrice de covariance associée, et d'autre part, par une valeur estimée d'un paramètre $b_1$ de référence et une matrice de covariance associée.

Cette méthode présente un coût calculatoire faible pour l'implantation dans le calculateur 10 de commandes de vol et ne demande pas de procédure d'optimisation supplémentaire.

Le test de détection compare le fonctionnement réel du paramètre $b_1$, estimé en ligne à l'aide de l'algorithme de type RARX, à un fonctionnement idéal du paramètre, attendu lorsqu'il n'y a pas de panne. Les valeurs du paramètre $b_1$ de référence et de la matrice de covariance associée, sont estimées à partir d'un cycle de fonctionnement normal. Dans l'hypothèse où le paramètre estimé est relativement constant en fonctionnement normal, une variation significative de celui-ci est interprétée comme la révélation d'un embarquement.

Dans ce test, les notations suivantes sont utilisées :

- $\hat{\theta}_2(k)$ : paramètre $b_1$ estimé en ligne ;
- $\hat{\theta}_1$ : valeur de référence du paramètre $b_1$ ;
- $C_2 (k)$ : matrice de covariance associée à $b_1$, estimée en ligne, censée traduire la variabilité du paramètre $b_1$ ; à chaque pas de calcul, cette matrice correspond à $p_{22}(k)$ du système (11);
- $C_1$ : valeur de référence de la matrice de covariance associée à $b_1$ ; et
- $\alpha$ : seuil de détection.

La première région de confiance R1 est constituée par la valeur $\hat{\theta}_1$ du paramètre estimé $b_1$ en fonctionnement de référence, avec les marges d'incertitudes associées, données par la matrice de covariance $C_1$, qui dans ce cas précis est un scalaire. La seconde région de confiance R2 est constituée par les calculs, en temps réel de $\hat{\theta}_2(k)$ du paramètre $b_1$ avec les marges d'incertitudes associées, données par la matrice de covariance $C_2(k)$. A l'instant t1, les deux régions de confiance R1 et R2 se chevauchent

On obtient donc, à chaque pas de calcul, deux ellipsoïdes dans l'espace paramétrique, centrées respectivement sur $\hat{\theta}_1$ et $\hat{\theta}_2 (k)$, qui sont censées avoir des points en commun en fonctionnement normal. Le test revient à vérifier qu'il existe une partie commune entre la région de confiance R1 autour des variables de référence en fonctionnement nominal et la région de confiance R2 autour des variables calculées en ligne. Une panne est détectée à partir du moment où les deux régions de confiance R1 et R2 ne se chevauchent plus, à l'instant t2 sur la figure 3. Autrement dit, quand le résultat du test qui compare le chevauchement entre les deux régions R1 et R2 est supérieur à un seuil donné, une panne est confirmée. L'évolution des deux régions de confiance R1 et R2 avant et après l'apparition d'un embarquement est présentée sur la figure 3.

La détection de l'embarquement est réalisée en trois étapes successives. On ne donne ci-dessous que la version simplifiée, mais il existe la possibilité de généraliser l'algorithme au cas multidimensionnel. Ces trois étapes consistent :

(i) à vérifier que : $\dfrac{(\hat{\theta}_2(k)-\hat{\theta}_1)^2}{C_2(k)} > \alpha$ . Si ce n'est pas le cas, alors les deux régions R1 et R2 se chevauchent et on a un fonctionnement normal,

(ii) à chercher avec la méthode de dichotomie (ou avec la résolution d'un polynôme de second ordre pour le cas particulier d'un seul paramètre), la racine négative unique $\lambda_0$ de F($\lambda$), où :

$$F(\lambda) = \frac{V^2(\lambda)}{C_2(k)} - \alpha \; ;$$

$$V(\lambda) = \frac{C_2(k)(\hat{\theta}_2(k)-\hat{\theta}_1)}{\lambda C_1 - C_2(k)} \; ;$$

$$F(-\infty) = -\alpha \text{ et } F(0) > 0 \; ;$$

avec une valeur initiale A<0 tel que F(A)<0

(iii) à calculer :

$$W = \frac{C_1(\hat{\theta}_2(k)-\hat{\theta}_1)}{\lambda_0 C_1 - C_2(k)} \; ;$$

$$test = \lambda_0^2 \frac{W^2}{C_1} \; ;$$

Si *test* > $\alpha$, alors il y a une panne de type embarquement.

La deuxième étape (ii) et la troisième étape (iii) sont réalisées uniquement dans la situation où l'inégalité de la première étape (i) est valable.

Le paramètre $\alpha$ est le paramètre de réglage du test de recouvrement des deux régions de confiance, qui peut être lié aux probabilités de fausse alarme et de non-détection, via des relations complexes. Autrement dit, il apparaît comme un paramètre de synthèse qui gère le compromis connu entre un faible retard à la détection et un faible taux de fausses alarmes.

Dans le cas de la présente invention, le seuil $\alpha$ est optimisé à partir d'un jeu de données entrée-sortie (ordre et position), utilisé pour estimer le paramètre $b_1$ sur lequel on applique le test de recouvrement des régions de confiance. La procédure consiste à faire varier $\alpha$ dans une plage de fonctionnement donnée, en injectant des embarquements avec des dynamiques différentes et à différents moments de temps afin de conclure sur le retard à la détection et le taux de fausses alarmes. La plage de fonctionnement est donnée par la table de chi-deux. En effet, dans le cas particulier où la loi de distribution de l'erreur de prédiction $\theta$ -$\hat{\theta}_1$ et $\theta$-$\hat{\theta}_2$ est gaussienne (ce qui n'est pas forcement le cas dans la présente invention), on choisit le seuil $\alpha$ à l'aide de la table de chi-deux pour différentes probabilités d'erreur. Par exemple, avec une probabilité d'erreur égale à 0,001 (c'est-à-dire 0,1%), donc une confiance de 99,9% dans le paramètre identifié, on obtient $\alpha$ =10,82. Une confiance de 99,9% se traduit par une probabilité de 99,9% afin que l'ellipse (la région du paramètre $b_1$) contienne la vraie valeur du paramètre estimé et donc une probabilité de 0,1% pour que la vraie valeur du paramètre se trouve à l'extérieur de l'ellipse.

Selon un troisième mode de réalisation, les moyens 25 détectent un embarquement si à la fois une valeur estimée du paramètre $b_1$ converge vers 0 et si, de façon simultanée, un signal d'erreur, fonction de données mesurées ou utilisées dans la boucle d'asservissement (par exemple *u* et *y*), est supérieur à un troisième seuil pendant un temps de confirmation, (la partie concernant le signal d'erreur étant décrite dans la demande de brevet FR1156900).

Pour les mêmes raisons que dans le premier mode de réalisation concernant le blocage, on vérifie que le

paramètre $b_1$ converge vers 0. On vérifie de plus, que de façon simultanée, un signal d'erreur, fonction de données mesurées ou utilisées dans la boucle d'asservissement (par exemple $u$ et $y$), est supérieur à un troisième seuil pendant un temps de confirmation, (la partie concernant le signal d'erreur étant décrite dans la demande de brevet FR1156900).

Un procédé et un dispositif susceptibles d'être utilisés pour vérifier la valeur de comparaison mentionnée ci-dessus sont décrits dans la demande de brevet FR1156900.

L'association des deux procédés permet une diminution du temps de confirmation utilisé dans le brevet FR1156900, ce qui implique un gain important sur la déflexion de la gouverne surtout pour les embarquements très rapides.

Dans ce troisième mode de réalisation, le dispositif 1 compare le fonctionnement réel de la chaîne d'asservissement surveillée (qui est illustré par le courant d'asservissement effectif mesuré par un capteur auxiliaire) relativement à la commande de la gouverne 3, à un fonctionnement théorique attendu hors panne, ce qui permet de mettre en évidence le cas échéant un embarquement de la gouverne 3.

De préférence, afin que l'algorithme récursif des moindres carrés soit capable de suivre en temps réel les changements des paramètres de la boucle d'asservissement de la gouverne 3, un facteur d'oubli $\lambda$ est inséré dans l'expression du critère à minimiser. Le facteur d'oubli permet "d'oublier" les données anciennes car elles sont considérées comme étant moins représentatives pour l'état actuel du système par rapport aux données récentes. La forme récursive de l'identification RARX avec facteur d'oubli s'écrit :

$$\begin{cases} \hat{y}(k) = \varphi^T(k)\hat{\theta}(k-1) \\ \varepsilon(k) = y(k) - \hat{y}(k) \\ K(k) = \dfrac{P(k-1)\varphi(k)}{\lambda + \varphi^T(k)P(k-1)\varphi(k)} \\ P(k) = \dfrac{P(k-1) - K(k)\varphi^T(k)P(k-1)}{\lambda} \\ \hat{\theta}(k) = \hat{\theta}(k-1) + K(k)\varepsilon(k) \end{cases} \qquad (4)$$

où $K(k)$ et $P(k)$ sont respectivement le gain et la matrice de covariance associée aux paramètres calculés, à l'instant $k$.

Le système (4) fonctionne de la façon suivante :

- le modèle paramétrique $\hat{\theta}(k\text{-}1)$ estimé à la période d'échantillonnage précédente, est utilisé pour calculer la sortie au moment présent $\hat{y}(k)$,
- la sortie prédite au moment présent est comparée ensuite avec la sortie réelle du système $y(k)$ et le signal d'erreur d'estimation $\varepsilon(k)$ est généré,
- à partir de ce signal d'erreur, le mécanisme de mise à jour corrige les valeurs des paramètres calculés du système $\hat{\theta}(k\text{-}1)$, en générant $\hat{\theta}(k)$.

Le facteur d'oubli (dont la valeur est entre 0 et 1) joue un rôle important sur la qualité de la sortie prédite. Pour une valeur très proche de 1 du facteur d'oubli, l'algorithme oublie peu les données passées, ce qui se traduit par une convergence lente. En revanche, une valeur trop petite du facteur d'oubli implique une adaptation rapide des paramètres identifiés mais avec une grande sensibilité par rapport au bruit. Le facteur d'oubli a des valeurs comprises entre [0, 1]. De préférence, il est généralement choisi entre 0,95 et 0,999.

Dans le cas d'un blocage, le choix du facteur d'oubli de la procédure d'identification est par exemple réalisé suite à une campagne de tests sur un jeu de données réelles enregistré en vol, en injectant des blocages à différents moments et à différentes positions. Le facteur d'oubli est alors choisi afin d'assurer un compromis entre la robustesse de la méthode et la précision de la détection.

Pour l'embarquement, afin de lisser au maximum le paramètre $b_1$, pour qu'il ne bouge pas beaucoup par rapport à sa valeur de référence en fonctionnement hors panne et donc pour ne pas déclencher une fausse alarme, un facteur d'oubli proche de 1 est choisi. Il est plus grand que dans le cas d'un blocage.

De plus, afin de rendre l'estimateur RARX plus robuste, le facteur d'oubli est directionnel, c'est-à-dire utilisé seulement dans une direction des données excitées. Plus précisément, les données anciennes sont prises en compte uniquement quand elles peuvent être remplacées par de nouvelles données. En effet, dans l'algorithme classique, les informations anciennes sont oubliées uniformément dans toutes les directions (chaque direction correspond à un paramètre estimé) et de manière continue dans le temps, mais seulement une partie de données anciennes peut être remplacée par de nouvelles informations $\varphi(k)$. Le principe de l'oubli directionnel appliqué quand l'information d'entrée est distribuée d'une manière non-uniforme dans l'espace des paramètres, où l'entrée n'excite pas le système dans toutes les directions, est donc de mettre à jour la matrice de covariance seulement dans la direction dans laquelle des données persistantes arrivent pour compenser les informations oubliées. Autrement dit, les informations anciennes sont oubliées seulement dans la direction de nouvelles données d'entrée excitées afin d'assurer la convergence des estimations et d'éviter des variations importantes de paramètres.

Le système (4) devient alors :

$$\begin{cases} \hat{\theta}(k) = \hat{\theta}(k-1) + K(k)\varepsilon(k) \\ \varepsilon(k) = y(k) - \varphi^T(k)\hat{\theta}(k-1) \\ K(k) = \dfrac{P(k-1)\varphi(k)}{1 + \varphi^T(k)P(k-1)\varphi(k)} \\ P(k) = P(k-1) - \dfrac{P(k-1)\varphi(k)\varphi^T(k)P(k-1)}{(\beta(k))^{-1} + \varphi^T(k)P(k-1)\varphi(k)} \\ \beta(k) = \begin{cases} \lambda - \dfrac{1-\lambda}{\varphi^T(k)P(k-1)\varphi(k)} & si\,\varphi^T(k)P(k-1)\varphi(k) > 0 \\ 1 & si\,\varphi^T(k)P(k-1)\varphi(k) = 0 \end{cases} \end{cases} \qquad (5)$$

Dans le système (5), on remarque le fait que le paramètre $\beta(k)$ devient variable dans l'équation de mise à jour de la matrice de covariance $P(k)$, uniquement dans la direction des données persistantes ($\varphi^T(k)P(k-1)\varphi(k) > 0$). Dans le cas contraire, $\beta(k) = 1$.

Ainsi, le calcul est moins sensible au bruit et il y a un risque moins élevé d'erreurs numériques ou d'erreurs de calcul du ou des paramètres.

Dans une variante particulière, la méthode de type RARX prend en compte une étape de factorisation U-D de Bierman, afin d'empêcher la divergence des paramètres calculés de la boucle d'asservissement de la gouverne 3 et afin d'assurer la robustesse numérique de la méthode. Elle a, d'une part, un faible coût calculatoire par rapport à d'autres méthodes existantes qui utilisent la racine carrée de la matrice de covariance. D'autre part, elle évite les risques d'instabilité numérique.

Une version factorisée de la matrice de covariance du système (5) est alors appliquée :

$$P(k) = U(k)D(k)U^T(k) \qquad (6)$$

où U est une matrice triangulaire supérieure avec des valeurs unitaires sur la diagonale et D est une matrice diagonale. Autrement dit, à chaque pas de calcul $k$, $U(k)$ et $D(k)$ sont mises à jour au lieu d'effectuer les calculs directement sur $P(k)$. Les avantages de cette factorisation sont la stabilité et la précision numériques et le fait de garantir que la matrice de covariance soit définie positive.

L'oubli directionnel et la factorisation U-D de Bierman ont pour but de remédier aux problèmes pratiques d'implantation de l'algorithme d'identification récursive RARX avec facteur d'oubli utilisé pour calculer les paramètres du système dynamique d'asservissement mono-entrée mono-sortie, afin de détecter une anomalie de la gouverne 3. L'amélioration de la robustesse numérique de l'algorithme conduit à l'intégration de quelques opérations supplémentaires, mais sa complexité calculatoire reste toutefois réduite et compatible avec le calculateur 10 de commandes de vol.

Sachant que U est une matrice triangulaire supérieure avec des valeurs unitaires sur la diagonale et D est une matrice diagonale, dans un mode de réalisation particulier d'un modèle de second ordre, les expressions des matrices $U$ et $D$ à chaque pas de calcul sont :

$$U(k) = \begin{bmatrix} 1 & u_1(k) \\ 0 & 1 \end{bmatrix} \qquad (9)$$

$$D(k) = \begin{bmatrix} d_1(k) & 0 \\ 0 & d_2(k) \end{bmatrix} \qquad (10)$$

En introduisant les équations (9) et (10) dans la relation (6), avec $P(k) = \begin{bmatrix} p_{11}(k) & p_{12}(k) \\ p_{21}(k) & p_{22}(k) \end{bmatrix}$, on déduit les éléments de la matrice de covariance:

$$\begin{cases} p_{11}(k) = d_1(k) + u_1^{\,2}(k)d_2(k) \\ p_{12}(k) = u_1(k)d_2(k) \\ p_{21}(k) = u_1(k)d_2(k) \\ p_{22}(k) = d_2(k) \end{cases} \qquad (11)$$

En utilisant les relations (11) dans les expressions du gain $K(k)$ et de la matrice de covariance $P(k)$ du système (5), on obtient les équations finales permettant aux moyens 22 du calculateur 10 de commandes de vol de calculer les paramètres de la boucle d'asservissement de la gouverne 3. Les deux premières équations du système (5) de mise à jour des paramètres et de l'erreur d'estimation restent inchangées.

Dans le mode de réalisation relatif aux régions de confiance R1, R2 pour la détection d'un embarquement, les valeurs de référence du paramètre $b_1$ et de la matrice de covariance associée sont fixées hors ligne. Elles sont établies en utilisant le même jeu de données entrée-sortie. Les valeurs nominales sont par exemple fixées en appliquant l'estimateur RARX avec facteur d'oubli pendant un temps relativement court, au début du jeu de données, jusqu'au moment de la convergence. Dans ce cas, on retient les valeurs du paramètre $b_1$ et de la composante $p_{22}$ de la matrice de covariance, qui sont associées respectivement à $\hat{\theta}_1$ et $C_1$.

Une autre méthode consiste à caractériser le comportement de référence suite à une succession de simulations pendant un temps suffisamment long et pour des régions avec des dynamiques différentes du jeu de données en fonctionnement normal. Le paramètre $b_1$ et la matrice de covariance sont estimés hors ligne à l'aide de l'identification ARX (pour « Autoregressive Exogenous Input » en anglais). Les valeurs de référence $\hat{\theta}_1$ et $C_1$ obtenues correspondent donc à un comportement moyen de la boucle d'asservissement en fonctionnement sain.

Par ailleurs, lors d'une détection, le dispositif 1 émet dans le poste de pilotage de l'aéronef, par l'intermédiaire de moyens d'alerte (qui sont par exemple reliés par une liaison aux moyens de détection 25), un signal d'alerte de type visuel et/ou sonore, afin de prévenir l'équipage de la panne et de lui permettre d'effectuer les actions limitant les conséquences de cette panne.

La détection d'un blocage et/ou d'un embarquement permet notamment de faire passer l'actionneur actif en mode passif, et d'utiliser le deuxième actionneur passé alors en mode actif, afin d'empêcher la poursuite de l'embarquement ou bien de débloquer la gouverne 3.

Le schéma synoptique de la figure 2 montre un ordre d'asservissement 30 donné à la boucle d'asservissement à l'étape 33. L'ordre d'asservissement 30, la position mesurée en sortie 31 par un capteur 9 de type LVDT et le facteur d'oubli 32 adopté selon la détection à effectuer, permettent de modéliser la dynamique de la boucle d'asservissement à l'étape 34. Ce modèle fournit au moins un paramètre estimé à surveiller à l'étape 35. A l'étape 36, la détection est opérée pour un blocage ou un embarquement selon au moins l'un des modes de réalisation décrits ci-dessus. La détection peut nécessiter un temps de confirmation de l'ordre d'asservissement 30, pour éviter les fausses alarmes dans le cas du blocage par exemple. Un signal 37 est envoyé en cas de détection d'une anomalie.

**Revendications**

1. Procédé de détection d'un blocage et/ou d'un embarquement d'une gouverne (3) d'aéronef qui est asservie en position par une chaîne d'asservissement (2) faisant partie d'un système (4) de commandes de vol électriques de l'aéronef et comportant :

    - ladite gouverne (3) qui est mobile, et dont la position par rapport à l'aéronef est réglée par au moins un actionneur (5) ;
    - ledit actionneur (5) qui règle la position de ladite gouverne (3), en fonction d'au moins un ordre d'actionnement reçu sous forme de commande d'asservissement ;

- au moins un capteur (8, 9) qui mesure la position effective de ladite gouverne (3) ; et
- au moins un calculateur (10) qui élabore un ordre de commande de gouverne, qui reçoit ladite position effective mesurée et qui en déduit un ordre d'actionnement qui est transmis audit actionneur (5) sous forme d'un courant d'asservissement,

**caractérisé en ce que** le procédé prévoit de réaliser, de façon automatique et répétitive, les étapes successives suivantes consistant :

a) à estimer la valeur d'au moins un paramètre d'une équation modélisant la dynamique de la boucle d'asservissement de la gouverne (3), conformément à une méthode récursive autorégressive à variable exogène de type RARX, au sens des moindres carrés récursifs ; et
b) à détecter un blocage et/ou un embarquement de ladite gouverne (3), en fonction au moins de la valeur ainsi estimée dudit paramètre par l'application d'un test de décision dans l'espace paramétrique.

2. Procédé selon la revendication 1,
**caractérisé en ce qu'**à l'étape a), l'équation modélisant la dynamique de la boucle d'asservissement est d'ordre 2 et présente la forme suivante :

$$\hat{y}(k) = b_1(k-1)u(k-nk) - a_1(k-1)y(k-1) \ ;$$

dans laquelle :

- $\hat{y}(k)$ est la position estimée de ladite gouverne (3) à un instant $k$ ;
- $y(k)$ est la position réelle de ladite gouverne (3) à l'instant $k$ fournie par ledit capteur (8, 9) ;
- $u(k)$ est une consigne, à l'instant $k$, calculée par un calculateur de commandes de vol à partir notamment d'un ordre donné par le pilote ;
- $nk$ est un nombre d'échantillons de retard entre l'ordre donné et la mise en position ; et
- $a_1(k)$ et $b_1(k)$ sont des paramètres à estimer à l'instant $k$ .

3. Procédé selon la revendication 2,
**caractérisé en ce qu'**à l'étape b), un blocage est détecté si une valeur estimée du paramètre $b_1$ converge vers 0.

4. Procédé selon la revendication 3,
**caractérisé en ce qu'**à l'étape b), le blocage est détecté au moins si, ladite valeur estimée du paramètre $b_1$ convergeant vers 0, sa valeur absolue est inférieure à un premier seuil prédéterminé pendant un temps donné.

5. Procédé selon la revendication 3 ou 4,
**caractérisé en ce qu'**à l'étape b), le blocage est détecté si, de plus, la valeur absolue d'une consigne d'asservissement $u$ est supérieure à un second seuil prédéterminé.

6. Procédé selon la revendication 2,
**caractérisé en ce qu'**à l'étape b), deux régions de confiance (R1, R2) sont définies, d'une part, par la valeur estimée du paramètre $b_1$ et une matrice de covariance associée, estimée en ligne et d'autre part, par une valeur calculée d'un paramètre $b_1$ de référence et une matrice de covariance associée, et **en ce qu'**un embarquement est détecté dès que ces deux régions de confiance (R1, R2) ne se chevauchent plus.

7. Procédé selon la revendication 2,
**caractérisé en ce qu'**à l'étape b), un embarquement est détecté, si à la fois une valeur estimée du paramètre $b_1$ converge vers 0 et si, de façon simultanée, un signal d'erreur fonction de données mesurées ou utilisées dans la boucle d'asservissement, est supérieur à un troisième seuil pendant un temps de confirmation.

8. Procédé selon l'une quelconque des revendications précédentes,
**caractérisé en ce qu'**à l'étape a), la méthode de type RARX prend en compte un facteur d'oubli directionnel.

9. Procédé selon la revendication 8,
**caractérisé en ce que** le facteur d'oubli directionnel présente une première valeur pour détecter un blocage, et une deuxième valeur pour détecter un embarquement, la première valeur étant inférieure à la deuxième valeur.

10. Procédé selon l'une quelconque des revendications précédentes,
**caractérisé en ce qu'**à l'étape a), une version améliorée de la méthode de type RARX est utilisée, par l'introduction d'un facteur d'oubli directionnel et d'une étape de factorisation U-D de Bierman.

11. Procédé selon l'une quelconque des revendications précédentes,
**caractérisé en ce qu'**en cas de détection d'un blocage ou d'un embarquement à l'étape b), on émet une alerte.

12. Dispositif de détection d'un blocage et/ou d'un embarquement d'une gouverne d'aéronef qui est asservie en position par une chaîne d'asservissement (2), ladite chaîne d'asservissement (2) faisant partie d'un système (4) de commandes de vol électriques de l'aéronef et comportant :

- ladite gouverne (3) qui est mobile, et dont la position par rapport à l'aéronef est réglée par au moins un actionneur (5) ;
- ledit actionneur (5) qui règle la position de ladite gouverne (3), en fonction d'au moins un ordre d'actionnement reçu sous forme de commande d'asservissement ;
- au moins un capteur (8, 9) qui mesure la position effective de ladite gouverne (3) ; et
- un calculateur (10) qui élabore un ordre de commande de gouverne, qui reçoit ladite position effective mesurée et qui en déduit un ordre d'actionnement qui est transmis audit actionneur (5) sous forme d'un courant d'asservissement,

**caractérisé en ce qu'**il comporte :

- des premiers moyens (22) pour estimer la valeur d'au moins un paramètre d'une équation modélisant la dynamique de la boucle d'asservissement de la gouverne (3), conformément à une méthode récursive autorégressive à variable exogène de type RARX au sens des moindres carrés récursifs ; et
- des deuxièmes moyens (25) pour détecter un blocage et/ou un embarquement de ladite gouverne (3), en fonction au moins de la valeur ainsi estimée dudit paramètre par l'application d'un test de décision dans l'espace paramétrique.

13. Système de commandes de vol électriques d'un aéronef, ledit système (4) comportant au moins un moyen (11) pour engendrer un ordre de commande de gouverne pour au moins une gouverne (3) de l'aéronef et au moins une chaîne d'asservissement (2) en position de cette gouverne (3), qui comprend :

- ladite gouverne (3) qui est mobile, et dont la position par rapport à l'aéronef est réglée par au moins un actionneur (5) ;
- ledit actionneur (5) qui règle la position de ladite gouverne (3), en fonction d'au moins un ordre d'actionnement reçu ;
- au moins un capteur (8, 9) qui mesure la position effective de ladite gouverne (3) ; et
- un calculateur (10) qui élabore ledit ordre de commande de gouverne, qui reçoit ladite position effective et qui en déduit un ordre d'actionnement qui est transmis audit actionneur (5),

**caractérisé en ce qu'**il comporte, de plus, un dispositif (1) de détection, tel que celui spécifié sous la revendication 12.

14. Aéronef,
**caractérisé en ce qu'**il comporte un système de commandes de vol électriques (4), tel que celui spécifié sous la revendication 13.

**Patentansprüche**

1. Verfahren zur Entdeckung des Verklemmens oder unkontrollierter Bewegung eines Flugzeugruders (3) das in Position gebracht wird durch eine Rückkopplungsstrecke (2), die zu einem System (4) elektrischer Flugsteuerungen des Flugzeugs gehört und die umfasst:

- das genannte Ruder (3), das beweglich ist und dessen Position in Bezug zum Flugzeug über mindestens einen Aktor (5) gesteuert wird;

- der genannte Aktor (5), der die Position des Ruders (3) in Abhängigkeit von mindestens einer Steueranweisung in Form eines Regelbefehls erhalten hat;
- mindestens ein Sensor (8, 9), der die tatsächliche Position dieses Ruders (3) misst; und
- mindestens ein Rechner (10), der einen Steuerbefehl für das Ruder errechnet, der die tatsächlich gemessene Position empfängt und daraus einen Regelbefehl folgert, der an den Aktor (5) in Form eines Steuerungsstroms übermittelt wird, **dadurch gekennzeichnet, dass** das Verfahren vorsieht, automatisch und wiederholt die folgenden aufeinanderfolgenden Schritte durchzuführen, die bestehen aus:

a) Schätzung des Wertes mindestens eines Parameters einer Gleichung, die die Dynamik der Rückkopplungsschleife des Ruders (3) simuliert, gemäß einem rekursiven, autoregressiven Prozess mit exogenen Variablen vom RARX- Typ, in Richtung der kleinsten rekursiven Quadrate; und

b) Feststellung des Verklemmens und / oder einer unkontrollierten Bewegung des genannten Ruders (3), entsprechend mindestens des so geschätzten Parameters durch die Anwendung eines Entscheidungstests in der parametrischen Flächen.

2. Verfahren gemäß Anspruch 1,
**dadurch gekennzeichnet, dass** in Schritt a), die Gleichung zur Simulierung der Rückkopplungsschleife die Größenordnung 2 hat und die folgende Form aufweist:

$$\hat{y}(k) = b_1(k-1)u(k-nk) - a_1(k-1)y(k-1);$$

in der:

- $\hat{y}(k)$ die geschätzte Position dieses Ruders (3) zu einem Zeitpunkt $k$ ist;
- $y(k)$ die tatsächliche Position dieses Ruders (3) zum Zeitpunkt $k$ ist, geliefert von diesem Sensor (8, 9) ;
- $u(k)$ ist ein Sollwert, zum Zeitpunkt $k$, berechnet von einem Flugsteuerungsrechner, ausgehend insbesondere von einem vom Piloten gegebenen Befehl;
- $nk$ ist eine Anzahl von Verzögerungsmustern zwischen dem erteilten Befehl und der Positionierung; und
- $a_1(k)$ und $b_1(k)$ sind Parameter, die zum Zeitpunkt k geschätzt werden müssen.

3. Verfahren gemäß Anspruch 2,
**dadurch gekennzeichnet, dass** in Schritt b) ein Verklemmen entdeckt wird, wenn ein geschätzter Parameter $b_1$ gegen 0 geht.

4. Verfahren gemäß Anspruch 3,
**dadurch gekennzeichnet, dass** in Schritt b) das Verklemmen entdeckt wird zumindest dann, wenn bei diesem geschätzten Wert des Parameters $b_1$, der gegen 0 geht, der absolute Wert während einer gegebenen Zeit kleiner ist als ein erster, vorher festgelegter Schwellenwert.

5. Verfahren gemäß Anspruch 3 oder 4,
**dadurch gekennzeichnet, dass** in Schritt b) das Verklemmen entdeckt wird, wenn außerdem der absolute Wert eines Steuerungssollwertes $u$ höher ist als ein zweiter, vorher festgelegter Schwellenwert.

6. Verfahren gemäß Anspruch 2,
**dadurch gekennzeichnet, dass** in Schritt b) zwei Sicherheitsregionen (R1, R2) definiert sind, erstens durch den geschätzten Wert des Parameters $b_1$, und einer verknüpften Kovarianzmatrix, on-line geschätzt, und zweitens durch einen berechneten Wert eines Referenzparameters $b_1$ und einer verknüpften Kovarianzmatrix, und dadurch, dass eine unkontrollierte Bewegung entdeckt wird, sobald sich die beiden Sicherheitsregionen (R1, R2) nicht länger überschneiden.

7. Verfahren gemäß Anspruch 2,
**dadurch gekennzeichnet, dass** in Schritt b) eine unkontrollierte Bewegung entdeckt wird, wenn gleichzeitig ein geschätzten Wert des Parameters $b_1$ gegen 0 geht, und wenn gleichzeitig, ein Fehlersignal, Funktion von in der Rückkopplungsschleife gemessener oder verwendeter Daten, während einer Bestätigungszeit größer ist als ein dritter Schwellenwert.

**8.** Verfahren nach irgendeinem der vorstehenden Ansprüche,
**dadurch gekennzeichnet, dass** in Schritt a) die Methode vom RARX- Typ einen Richtungs- Vergessensfaktor berücksichtigt.

**9.** Verfahren gemäß Anspruch 8,
**dadurch gekennzeichnet, dass** der Richtungs- Vergessensfaktor einen ersten Wert zum Erkennen eines Verklemmens und einen zweiten Wert zum Erkennen einer unkontrollierten Bewegung enthält, wobei der erste Wert niedriger ist, als der zweite Wert.

**10.** Verfahren nach irgendeinem der vorstehenden Ansprüche,
**dadurch gekennzeichnet, dass** in Schritt a) eine verbesserte Methode vom RARX- Typ verwendet wird, durch Einführung eines Richtungs- Vergessensfaktor und einer UD- Faktorierung nach Bierman.

**11.** Verfahren nach irgendeinem der vorstehenden Ansprüche,
**dadurch gekennzeichnet, dass** bei Erkennen eines Verklemmens oder einer unkontrollierten Bewegung in Schritt b) eine Warnung ausgegeben wird.

**12.** Vorrichtung zum Erkennen eines Verklemmens oder einer unkontrollierten Bewegung eines Flugzeugruders das in Position gebracht wird durch eine Rückkopplungsstrecke (2), die zu einem System (4) elektrischer Flugsteuerungen des Flugzeugs gehört und die umfasst:

- das genannte Ruder (3), das beweglich ist und dessen Position in Bezug zum Flugzeug über mindestens einen Aktor (5) gesteuert wird;
- den genannten Aktor (5), der die Position des Ruders (3) in Abhängigkeit von mindestens einer Steueranweisung in Form eines Regelbefehls einstellt;
- mindestens einen Sensor (8, 9), der die tatsächliche Position dieses Ruders (3) misst; und
- einen Rechner (10), der einen Steuerbefehl für das Ruder errechnet, der die tatsächlich gemessene Position empfängt und daraus einen Regelbefehl folgert, der an den Aktor (5) in Form eines Steuerungsstroms übermittelt wird, **dadurch gekennzeichnet, dass** er umfasst:

- eine erste Vorrichtung (22) zur Schätzung des Wertes mindestens eines Parameters einer Gleichung, die die Dynamik der Rückkopplungsschleife des Ruders (3) simuliert, gemäß einem rekursiven, autoregressiven Prozess mit exogenen Variablen vom RARX- Typ, in Richtung der kleinsten rekursiven Quadrate; und
- eine zweite Vorrichtung (25) zum Erkennen eines Verklemmens und / oder einer unkontrollierten Bewegung des genannten Ruders (3), entsprechend mindestens des so geschätzten Wertes des genannten Parameters durch die Anwendung eines Entscheidungstests in der parametrischen Flächen.

**13.** System elektrischer Flugsteuerungen eines Flugzeugs, wobei dieses System (4) mindestens ein Mittel (11) zur Erzeugung eines Flügelsteuerungsbefehls für mindestens ein Ruder (3) des Flugzeugs umfasst, und mindestens eine Rückkopplungsstrecke (2) zur Positionierung dieses Ruders (3), die enthält:

- das genannte Ruder (3), das beweglich ist und dessen Position in Bezug zum Flugzeug über mindestens einen Aktor (5) gesteuert wird;
- den genannten Aktor (5), der die Position des Ruders (3) in Abhängigkeit von mindestens einem Regelbefehl einstellt;.
- mindestens einen Sensor (8, 9), der die tatsächliche Position dieses Ruders (3) misst; und
- einen Rechner (10), der einen Steuerbefehl für das Ruder errechnet, der die tatsächlich gemessene Position empfängt und daraus einen Regelbefehl folgert, der an den Aktor (5) übermittelt wird, **dadurch gekennzeichnet, dass** es zudem eine Erkennungsvorrichtung (1) enthält, wie in Anspruch 12 angegeben ist.

**14.** Flugzeug, **dadurch gekennzeichnet, dass** es ein System (4) elektrischer Flugsteuerungen enthält, wie es in Anspruch 13 angegeben ist.

**Claims**

**1.** Method for detecting jamming and/or uncontrolled movement of an aircraft control surface (3) which is controlled in position by a feedback loop (2) forming part of an electrical flight control system (4) of the aircraft and including:

- said control surface (3), which is movable and of which the position with respect to the aircraft is adjusted by at least one actuator (5);
- said actuator (5) which adjusts the position of said control surface (3), as a function of at least one actuating command received in the form of a feedback command;
- at least one sensor (8,9) which measures the effective position of said control surface (3); and
- at least one computer (10) which produces a control command for the control surface, which receives said measured effective position and which deduces therefrom an actuating command which is transmitted to said actuator (5) in the form of a feedback current,

**characterised in that** the method provides for performing, in an automatic and repetitive manner, the following successive steps, consisting of:

a) estimating the value of at least one parameter of an equation simulating the feedback loop dynamic of the control surface (3), according to a recursive autoregressive method with exogenous variable of RARX type in a recursive least squares way; and
b) detecting jamming and/or uncontrolled movement of said control surface (3), according at least to the estimated parameter value by the application of a decision test in the parametric space.

2. Method according to Claim 1,
**characterised in that** in the step a), the equation simulating the feedback loop dynamic is second order and has the following form:

$$\hat{y}(k) = b_1(k-1)u(k-nk) - a_1(k-1)y(k-1)$$

in which:

- $\hat{y}(k)$ is the estimated position of said control surface (3) at an instant $k$;
- $y(k)$ is the real position of said control surface (3) at the instant $k$ supplied by said sensor (8, 9);
- $u(k)$ is a setpoint, at the instant $k$, calculated by a flight control computer on the basis in particular of a command given by the pilot;
- $nk$ is a number of delayed samples between the given order and the positioning; and
- $a_1(k)$ and $b_1(k)$ are parameters to be estimated at the instant $k$.

3. Method according to Claim 2, **characterised in that** in the step b), jamming is detected if an estimated value of the parameter $b_1$ converges towards 0.

4. Method according to Claim 3, **characterised in that** in the step b), jamming is detected at least if, said estimated value of the parameter $b_1$ converging towards 0, its absolute value is less than a first predetermined threshold during a given time.

5. Method according to either Claim 3 or Claim 4, **characterised in that** in the step b), jamming is detected if in addition the absolute value of a feedback setpoint $u$ is greater than a second predetermined threshold.

6. Method according to Claim 2, **characterised in that** in the step b), two confidence regions (R1, R2) are defined, on the one hand, by the estimated value of the parameter $b_1$ and an associated covariance matrix estimated online, and on the other hand, by a calculated value of a reference parameter $b_1$ and an associated covariance matrix, and **in that** an uncontrolled movement is detected as soon as these two confidence regions (R1, R2) no longer overlap.

7. Method according to Claim 2, **characterised in that** in the step b), an uncontrolled movement is detected if at the same time an estimated value of the parameter $b_1$ converges towards 0 and if, simultaneously, an error signal which is a function of data measured or used in the feedback loop is greater than a third threshold during a confirmation time.

8. Method according to any one of the preceding claims, **characterised in that** in the step a), the RARX type method takes into account a directional forgetting factor.

9. Method according to Claim 8, **characterised in that** the directional forgetting factor has a first value in order to detect jamming, and a second value in order to detect uncontrolled movement, the first value being less than the second value.

10. Method according to any one of the preceding claims, **characterised in that** in the step a), an improved version of the RARX type method is used, by the introduction of a directional forgetting factor and a step of UD factorisation according to Bierman.

11. Method according to any one of the preceding claims, **characterised in that** in the event of detection of jamming or uncontrolled movement in the step b), an alert is issued.

12. Device for detecting jamming and/or uncontrolled movement of an aircraft control surface (3) which is controlled in position by a feedback loop (2), said feedback loop (2) forming part of an electrical flight control system (4) of the aircraft and including:

- said control surface (3), which is movable and of which the position with respect to the aircraft is adjusted by at least one actuator (5);
- said actuator (5) which adjusts the position of said control surface (3), as a function of at least one actuating command received in the form of a feedback command;
- at least one sensor (8,9) which measures the effective position of said control surface (3); and
- a computer (10) which produces a control command for the control surface, which receives said measured effective position and which deduces therefrom an actuating command which is transmitted to said actuator (5) in the form of a feedback current,

**characterised in that** it includes:

- first means (22) for estimating the value of at least one parameter of an equation simulating the feedback loop dynamic of the control surface (3), according to a recursive autoregressive method with exogenous variable of RARX type in a recursive least squares way; and
- second means (25) for detecting jamming and/or uncontrolled movement of said control surface (3), according at least to the estimated parameter value by the application of a decision test in the parametric space.

13. Electrical flight control system of an aircraft, said system (4) comprising at least one means (11) in order to generate a control surface control command for at least one control surface (3) of the aircraft and at least one feedback loop (2) for controlling the position of this control surface (3), which comprises:

- said control surface (3), which is movable and of which the position with respect to the aircraft is adjusted by at least one actuator (5);
- said actuator (5) which adjusts the position of said control surface (3), as a function of at least one actuating command received;
- at least one sensor (8,9) which measures the effective position of said control surface (3); and
- a computer (10) which produces said control command for the control surface, which receives said effective position and which deduces therefrom an actuating command which is transmitted to said actuator (5), **characterised in that** it also includes a detection device (1) such as that specified in Claim 12.

14. Aircraft, **characterised in that** it includes an electrical flight control system (4) such as that specified in Claim 13.

Fig. 1

Fig. 2

Fig. 3

**EP 2 770 392 B1**

**Documents brevets cités dans la description**

- EP 2551191 A1

- FR 1156900